# EUROPEAN PATENT SPECIFICATION

(11) **EP 2 641 432 B1**
(45) Date of publication and mention of the grant of the patent: **04.04.2018**
(21) Application number: 11793901.7
(22) Date of filing: 14.11.2011
(51) Int. Cl.: H04W 52/02

(54) **POWER OPTIMIZED DEMODULATOR FRONT END (DEMFRONT) RECEIVER SUBSYSTEM**
LEISTUNGSOPTIMIERTES SUBSYSTEM EINES DEMFRONT-EMPFÄNGERS
SOUS-SYSTÈME DE RÉCEPTEUR D'EXTRÉMITÉ FRONTALE DE DÉMODULATION (DEMFRONT) À OPTIMISATION DE PUISSANCE

(30) Priority: 16.11.2010 US 414064 P; 27.10.2011 US 201113282648
(43) Date of publication of application: 25.09.2013
(73) Proprietor: Qualcomm Incorporated, San Diego, CA 92121 (US)
(72) Inventor: CHUI, Jimmy, C., San Diego, CA 92121 (US); GOPALAN, Ravi, San Diego, CA 92121 (US); LU, Feng, San Diego, CA 92121 (US); XIE, Guang, San Diego, CA 92121 (US)
(74) Representative: Dunlop, Hugh Christopher
(86) International application number: PCT/US2011/060634
(87) International publication number: WO 2012/128793

(56) References cited:
- WO-A1-2004/017655
- WO-A1-2008/012522
- WO-A1-2008/076843
- US-A1- 2004 240 531
- US-A1- 2007 071 070

## Description

### CLAIM OF PRIORITY UNDER 35 U.S.C. §119

The present Application for Patent claims priority to Provisional Application No. 61/414,064 entitled "POWER OPTIMIZED DEMODULATOR FRONT END (DEMFRONT) RECEIVER SUBSYSTEM" filed November 16, 2010, and assigned to the assignee hereof.

### BACKGROUND

Aspects of the present disclosure relate generally to wireless communication systems, and more particularly, to power optimization procedures by the receiver subsystem in user equipment or similar devices.

Wireless communication networks are widely deployed to provide various communication services such as telephony, video, data, messaging, broadcasts, and so on. Such networks, which are usually multiple access networks, support communications for multiple users by sharing the available network resources. One example of such a network is the UMTS Terrestrial Radio Access Network (UTRAN). The UTRAN is the radio access network (RAN) defined as a part of the Universal Mobile Telecommunications System (UMTS), a third generation (3G) mobile phone technology supported by the Third Generation Partnership Project (3GPP). The UMTS, which is the successor to Global System for Mobile Communications (GSM) technologies, currently supports various air interface standards, such as Wideband-Code Division Multiple Access (W-CDMA), Time Division-Code Division Multiple Access (TD-CDMA), and Time Division-Synchronous Code Division Multiple Access (TD-SCDMA). The UMTS also supports enhanced 3G data communications protocols, such as High Speed Packet Access (HSDPA), which provides higher data transfer speeds and capacity to associated UMTS networks.

As the demand for mobile broadband access continues to increase, research and development continue to advance the UMTS technologies not only to meet the growing demand for mobile broadband access, but to advance and enhance the user experience with mobile communications.

One way to improve the user experience, and mobile communication performance, is through managing power usage. For example, discontinuous reception (DRX) in connected mode is a power savings specification or feature that aims to reduce power consumption at a User Equipment (UE). Additional improvements in powers savings are desired.

Patent application WO 2008/012522 relates to a method of ameliorating channel effects present in a signal received through a channel, wherein the signal conveys at least first and second information streams and the method comprises the steps of determining from the first stream activation of the second stream and processing the signal to ameliorate channel effects, when the second stream is present, in a first manner comprising filtering the signal through filter means to ameliorate channel dispersion and then processing the signal through Rake receiver means or, when the second stream is absent, in a second manner comprising processing the signal through the Rake receiver means without prior amelioration of channel dispersion by the filter means.

### SUMMARY

Aspects of the present invention are set out in the appended claims.

These and other aspects of the invention will become more fully understood upon a review of the detailed description, which follows.

### BRIEF DESCRIPTION OF THE DRAWINGS

FIG. 1 illustrates a flow diagram for a methodology for power optimization.
FIG. 2 illustrates a functional block diagram of a cellular communication system with user equipment for power-optimized selection between receivers.
FIG. 3 illustrates a flow diagram for a methodology for power optimization in a cellular communication system according to one aspect.
FIGS. 4A-4C illustrate timing diagrams for a receiver selector of a User Equipment (UE) that performs Discontinuous Reception (DRX) in a connected mode by receiving a control channel with a low power receiver and enabling a high power receiver when a condition is detected.
FIGS. 4D-4F illustrate timing diagrams for a receiver selector of a UE that performs DRX in a connected mode by receiving a control channel with a low power receiver and enabling a high power receiver for a duration of a timer triggered when the control channel intended for the UE is decoded.
FIG. 5 depicts a conceptual diagram illustrating an example of a hardware implementation for one aspect of a power-optimized apparatus.
FIG. 6 depicts a schematic diagram of an aspect of a power-optimized user equipment operating in a UMTS system employing a W-CDMA air interface.
FIG. 7 depicts a schematic block diagram of an aspect of a power-optimized user equipment operating in an access network in a UTRAN architecture.
FIG. 8 depicts a schematic block diagram of an aspect of a base node communicating with an aspect of a power-optimized user equipment.
FIG. 9 illustrates a schematic block diagram for a system for a power-optimizing demodulator front end receiver subsystem selection in a cellular communication system according to one aspect.

### DETAILED DESCRIPTION

In wireless technologies, a User Equipment (UE) may have multiple modes of operation for its demodulation front-end ("demfront") receivers in the receiver subsystem. Demfront receivers employed at the UE include rake receivers, linear equalizer receivers, and equalizers that utilize interference mitigation. In addition, demfront receivers may also take advantage of receive diversity. Multiple receivers may be used because one receiver may outperform another in certain scenarios.

Discontinuous Reception (DRX) is a feature in wireless technologies (e.g., HSPA+, LTE, etc.) that defines a subset of downlink channels that a UE is required to monitor over specified time intervals. During these intervals, the UE is allowed to shut down receiver circuitry and hence reduce power usage, thereby increasing battery life. Such receiver circuitry can include but is not limited to radio receivers and hardware used in the demfront receivers. A basic overview of DRX concepts in connected mode can be found in 3GPP TS 25.903 Release 7. With the benefit of the present disclosure, it should be appreciated that this description can be extended outside of Release 7 specifications and to other radio access technologies.

As recognized herein, opportunities to further reduce power usage occur during periods of network inactivity. In particular, if there is no HSDPA (High-Speed Downlink Packet Access) data being scheduled by the network, then the demfront receiver subsystem for HSDPA at the UE is only required to monitor signaling on HS-SCCH (and HS-PDSCH transmission for the case of HS-SCCH-less transmission) to detect the start of network activity intended for the UE.

Moreover, as recognized herein, various demfront receivers may consume different power. In general, demfront receiver performance and power utilization are correlated. For example, a Rake receiver running in a non-receive-diversity mode is assumed and expected to consume less power than an equalizer that supports interference mitigation in receive-diversity mode; performance degradation is also assumed and expected. This power difference can come in the form of either hardware usage by the receivers, or variations in demodulation time.

The present innovation discloses using a low-power receiver subsystem mode of operation during times of network inactivity, and using a higher performing (e.g. relatively higher data rate capability) receiver subsystem mode of operation that consumes more power when network activity is detected. In an aspect, the present innovation may include two parts: one where receiver subsystem selection due to network activity is based on internal UE timers, and the other where receiver subsystem selection due to network activity is based on DRX configuration, if configured. For the latter, power-optimized receiver subsystem selection can be performed in conjunction with power optimizations due to shutdown of receiver circuitry. A combination of the two approaches is also possible.

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

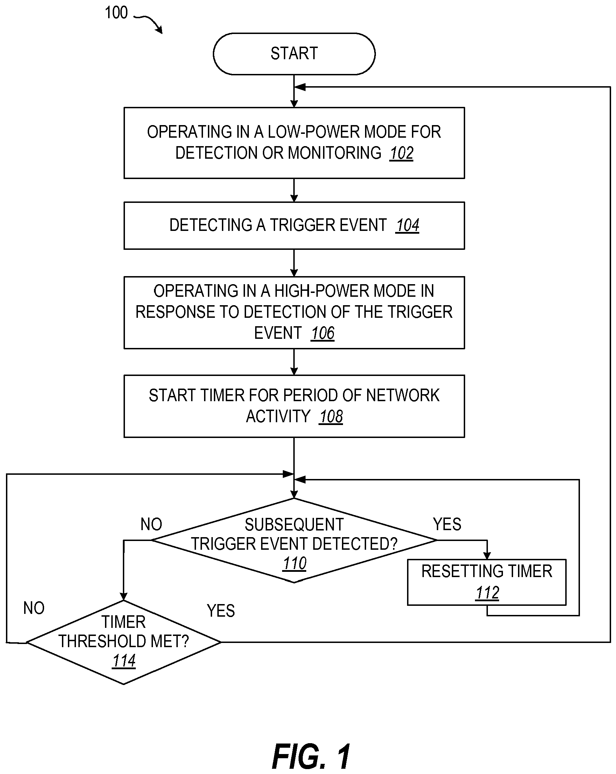

In **FIG. 1****,** the present disclosure provides a methodology **100** for power optimization. In block **102,** a device operates in a low-power mode for detection or monitoring, e.g. of a control channel. For example, the device operates a relatively low power first receiver system to achieve the low-power mode. The device detects a trigger event (e.g., valid High Speed Shared Control Channel (HS-SCCH), valid High-Speed Physical Downlink Shared Channel (HS-PDSCH), etc.) (block **104).** Subsequently, the device operates in a high-power mode in response to detection of the trigger event (block **106).** For example, the device operates a relatively high power second receiver system, which may be different from or the same as the first receiver system, and may turn off the relatively low power receiver system. In block **108,** the device starts a timer for a period that corresponds to network activity (e.g., a data transmission). For example, the timer may start substantially at a same time as the initiation of operation of the high-power mode. The device makes a determination whether a subsequent trigger event has occurred while operating in the high-power mode (block **110).** For example, the subsequent trigger event may include, but is not limited to, detecting that the device is schedule to receive additional data. If the subsequent trigger event is detected, then the timer is reset (block **112)** and processing returns to block **110.** If the subsequent trigger event is not detected, then a further determination is made as to whether the data transmission has concluded or the timer has expired (e.g., timer threshold has been met) (block **114).** If met, then processing returns to block **102** to revert to the low-power mode. If not met, then processing returns to block **110** to continue high-power mode.

For example, the timer threshold can be based on a parameter in the network configuration, such as the Continuous Packet Connectivity-Discontinuous Reception (CPC-DRX) parameter Inactivity_Threshold_for_UE_DRX_Cycle. In another example, the timer can be based on a parameter in the network configuration, such as the Enhanced UE DRX T321 parameter. Alternatively or in addition to these timer thresholds based on network configuration parameters, an internal user equipment timer threshold can be used.

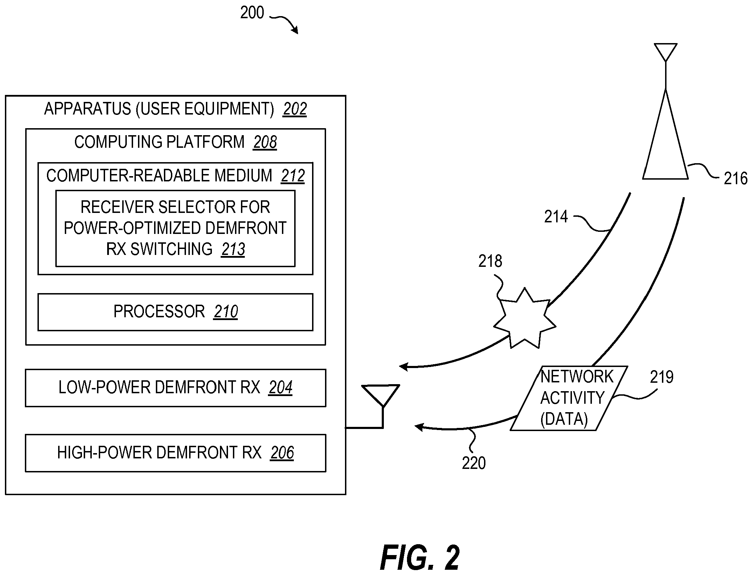

In **FIG. 2****,** in a cellular communication system **200,** an apparatus, depicted as User Equipment (UE) **202,** optimizes power consumption by demodulator front end receiver subsystem selection. A first demodulation front end receiver subsystem **204** consumes less power than the second demodulation front end receiver subsystem **206,** although generally as a trade-off for performance. A computing platform **208,** including a processor **210** and non-transitory computer readable medium **212** for storing codes for a receiver selector **213,** enables the first demodulation front end receiver subsystem **204** to receive a downlink control channel **214** from a node **216.** The computing platform **208** detects a trigger event **218** indicating a data transmission **219** on a downlink data channel **220.** In response, the computing platform **208** enables the second demodulation front end receiver subsystem **206** to receive the data transmission **219,** and may cease operation of the first demodulation front end receiver subsystem **204** during data reception.

It should be appreciated with the benefit of the present disclosure that selection of the first and second demodulation front end receiver subsystems **204, 206** can be dynamic, selecting among a plurality of receivers or receiver modes provisioned on the UE **202.** For example, which provisioned receiver is relatively low power or relatively better performing can change depending upon a band or communication protocol being used, presence or absence of an interference source, multipath channel fading, etc. For example, a particular provisioned receiver can be relative lower power in one scenario but relatively higher power in another scenario. Alternatively, a selected receiver can be usable in one situation but not in another.

In a first exemplary aspect, the first receiver comprises a rake receiver and the second receiver comprises an equalizer receiver.

In a second exemplary aspect, the first receiver does not perform interference mitigation and the second receiver performs interference mitigation.

In a third exemplary aspect, the first receiver does not perform receive diversity and the second receiver performs receive diversity.

In one aspect, a low-power mode can be a feature-reduced version of a high-power mode. For example, the high-power mode can be a usual mode of operation.

In one aspect, the first demodulation front end receiver subsystem **204** comprises a non-receive-diversity rake receiver. The second demodulation front end receiver subsystem **206** comprises a selected one of a rake receiver with receive diversity, an equalizer receiver without receive diversity, an equalizer receiver with receive diversity, an equalizer with interference mitigation receiver without receive diversity, and an equalizer with interference mitigation receiver with receive diversity.

In another aspect, the first demodulation front end receiver subsystem **204** comprises a receive-diversity rake receiver. The second demodulation front end receiver subsystem **206** comprises a selected one of an equalizer receiver without receive diversity, an equalizer receiver with receive diversity, an equalizer with interference mitigation receiver without receive diversity, and an equalizer with interference mitigation receiver with receive diversity.

In an additional aspect, first demodulation front end receiver subsystem **204** comprises a non-receive-diversity receiver and the second demodulation front end receiver subsystem **206** comprises a receive-diversity receiver.

A rake receiver is a radio receiver designed to counter the effects of multipath fading. It does this by using several "sub-receivers" called fingers, that is, several correlators each assigned to a different multipath component. Each finger independently decodes a single multipath component; at a later stage the contribution of all fingers are combined in order to make the most use of the different transmission characteristics of each transmission path. This could very well result in higher signal-to-noise ratio, or the energy per bit to noise power spectral density ratio (E_{b}/N₀), in a multipath environment than in a "clean" environment. The multipath channel through which a radio wave transmits can be viewed as transmitting the original (line of sight) wave plus a number of multipath components. Multipath components are delayed copies of the original transmitted wave traveling through a different echo path, each with a different magnitude and time-of-arrival at the receiver. Since each component contains the original information, if the magnitude and time-of-arrival (phase) of each component is computed at the receiver (through a process called channel estimation), then all the components can be added coherently to improve the information reliability. The rake receiver is so named because it reminds one of the function of a garden rake, each finger of the rake receiver collecting symbol energy similarly to how tines on a rake collect leaves. Rake receivers are common in a wide variety of CDMA and W-CDMA radio devices such as mobile phones and wireless LAN equipment.

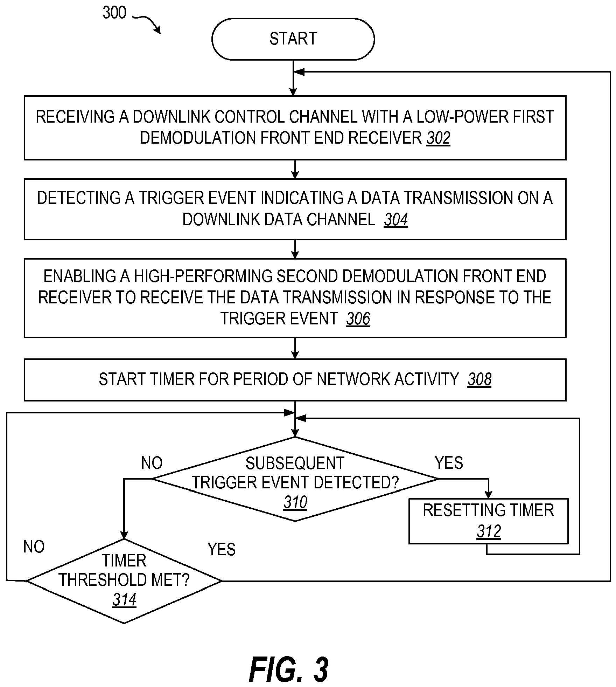

In **FIG. 3****,** the present disclosure provides, in one aspect, a methodology **300** for power optimization in a cellular communication system. In block **302,** a first demodulation front end receiver subsystem of a device operates in a relatively low power mode to receive a downlink control channel. The device detects a trigger event indicating a data transmission on a downlink data channel (block **304).** The device enables or switches to use of a second demodulation front end receiver subsystem, operating in a relatively high power mode with respect to the first demodulation front end receiver subsystem, to receive the data transmission in response to the trigger event, optionally providing higher performance, e.g. a higher data rate capability (block **306).** After the network activity concludes, the device returns or switches back to use of the low-power mode for detection or monitoring of the downlink control channel, depicted as returning to block **302**. In block **308,** the device starts a timer for a period that corresponds to network activity (e.g., data transmission, or reception of the data transmission). For example, the timer may be started when the device switches to using the second demodulation front end receiver subsystem, e.g., the higher power mode. The device makes a determination whether a subsequent trigger event has occurred while operating in the high-power mode (block **310).** For example, the subsequent trigger event may include, but is not limited to, detecting that the device is schedule to receive additional data. If the subsequent trigger event is detected, then the timer is reset (block **312)** and processing returns to block **310**. If not detected, then a further determination is made as to whether the data transmission has concluded (e.g., timer threshold has been met) (block **314).** If met, then processing returns to block **302** to revert to operating the receiver in the low-power mode. If not met, then processing returns to block **310** to continue operating the receiver in the high-power mode.

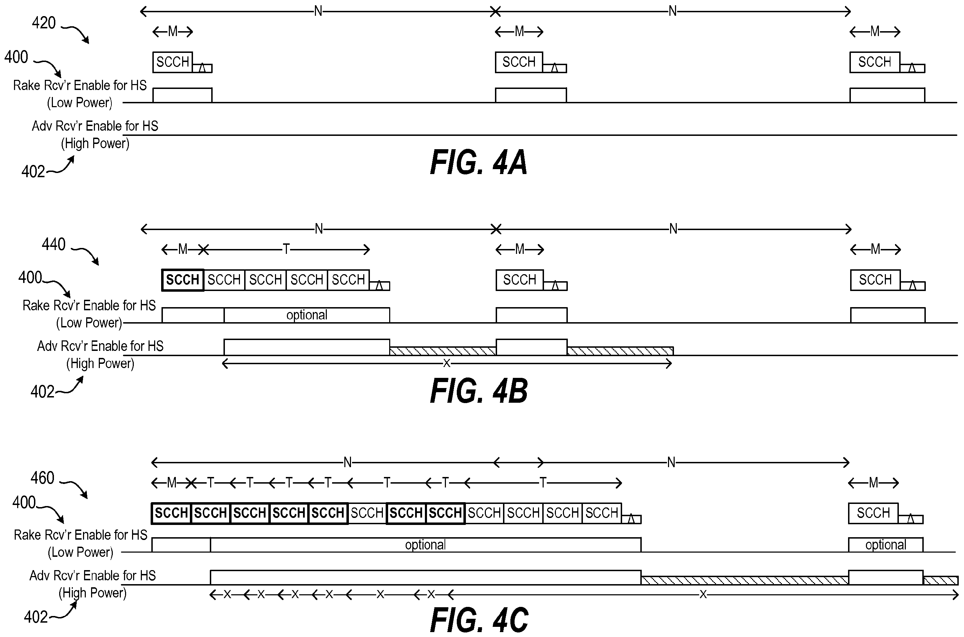

In **FIGS. 4A-4F****,** illustrative timing diagrams for operation of the receiver selector **213** of a UE **202** (FIG. 2) are depicted for enabling either a low power receiver **400** (e.g., Rake receiver, a non-receive diversity receiver, a non-interference mitigating receiver, etc.) or a high power receiver **402** (e.g., equalizer receiver, receive diversity receiver, interference mitigating receiver, etc.). Although not depicted to scale, a DRX cycle of N = 10 subframes is depicted in these examples. For clarity, the number of SCCH to monitor in a reception pattern is M = 1, although aspects described herein can be applied to more than one SCCH. An inactivity threshold "T" kicks in if the SCCH is valid for the UE.

A block labeled SCCH is not annotated (e.g. not represented in bold text, but instead represented as a thin line) for a SCCH subframe that is monitored by the UE and the SCCH CRC fails to indicate that the SCCH is not intended for the UE. A block labeled SCCH is annotated (e.g. represented as bold text or a heavy line) for a SCCH subframe that is monitored by the UE and the SCCH CRC passes, thereby indicating that the SCCH is intended for the UE.

Each block including a delta "Δ" indicates a decoding delay following a SCCH subframe. For clarity, the decoding delay is depicted as identical between low and high power modes; however, the high power receiver can take longer to decode. Additionally, all figures depict an offset between the timelines for the lower power receiver **400** and the high power receiver **402** and the end of the SCCH subframe due to this modeling of the decoding delay (delta "Δ").

In **FIGS. 4A-4C****,** in a first version of the receiver selector **213,** a threshold for advanced receiver enablement is depicted. An underlying aspect is that enablement of the advanced receiver (high-power receiver **402)** is in response to a valid SCCH for the duration of some condition. In this case, the condition is to continue using the high power receiver **402** for "X" subframes beyond the last SCCH valid for the UE. **FIG. 4A** shows only the low power receiver **400** being enabled during DRX to decode SCCH frames that are intended for the UE. In **FIGS. 4B-4C****,** for the advanced receiver **402,** a rectangle annotated with hatching indicates that the advanced receiver **402** is still active. Since the HS channels do not need monitoring, the advanced receiver **402** can be disabled during these intervals. The advanced receiver is enabled during the next SCCH reception pattern if timer "X" has not expired. In **FIG. 4C****,** the repeated sequence of T's and X's indicate that the timers are reset on each occurrence of a valid SCCH.

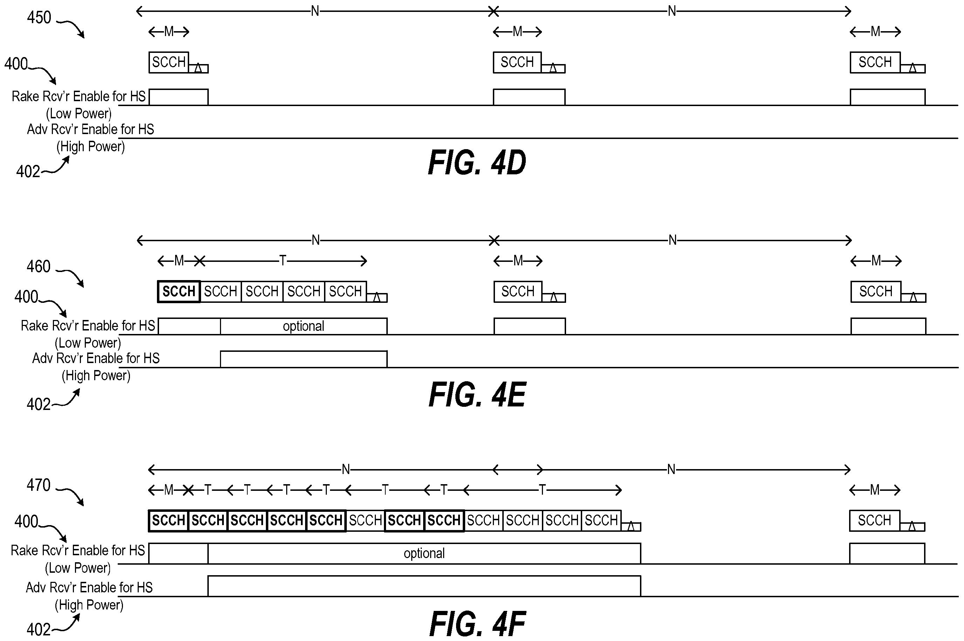

In **FIGS. 4D-4F****,** a second version of the receiver selector **213** a timer for advanced receiver enablement is depicted. An underlying aspect is that enablement of the advanced receiver (high-power receiver **402)** is in response to a valid SCCH for the duration of a timer (inactivity threshold "T"). **FIG. 4D** shows only the low power receiver **400** being enabled during DRX to decode SCCH frames that are intended for the UE. In **FIGS. 4E-4F****,** for the advanced receiver **402,** a rectangle annotated with hatching indicates that the advanced receiver **402** is still active. Since the HS channels do not need monitoring, the advanced receiver **402** can be disabled during these intervals. The advanced receiver is enabled during the next SCCH reception pattern if timer "T" has not expired. In **FIG. 4F****,** the repeated sequence of T's indicate that the timer is reset on each occurrence of a valid SCCH.

Power-Optimized Demfront Selection for Discontinuous Reception (DRX): As one of two examples, in 3GPP UMTS Release 7 CPC-DRX specifications, required monitoring of HS-SCCH and HS-PDSCH during the subframes in the HS-SCCH reception pattern is known based on Continuous Packet Connectivity (CPC) configuration, as defined in Section 6C.3 of 3GPP TS 25.214 Release 7. This monitoring is required and independent of network activity. The requirement is to monitor HS-SCCH and HS-PDSCH (if required) every UE_DRX_Cycle subframes, which can be configured to be one of 4, 5, 8, 10, 16, or 20 subframes. All other requirements on downlink channel monitoring are dependent on either uplink or downlink activity.

The parameter Inactivity_Threshold_for_UE_DRX_Cycle is the number of subframes required for monitoring after a valid HS-SCCH (or HS-PDSCH) intended for the UE has been detected. This means that if HS-SCCH intended for the UE has been transmitted by the network, then network can schedule HS-SCCH and HS-PDSCH for the UE outside of the HS-SCCH reception pattern as long as it is within the inactivity threshold. This also means that high throughputs are possible if data scheduling is made continuous.

Power savings are realized by having a UE default to a low-power demfront receiver subsystem mode of operation (e.g., only using a rake receiver without receive diversity) when the UE is outside of the Inactivity_Threshold_for_UE_DRX_Cycle, and by not having any advanced demfront receivers enabled. For the case where demfront receivers have different timelines, an alternative is for multiple demfront receivers to be enabled but the low-power demfront receiver is the selected one. In either case, this means that during the network inactivity (e.g. outside the inactivity threshold for this case), the UE may not be as capable of decoding high data rates (as compared to advanced receivers). However, high data rates are not required because there is no network activity being sent on HSDPA channels.

Once a valid HS-SCCH (or HS-PDSCH) for the UE has been detected with the low-power demfront receiver subsystem, then the UE enables the demfront receiver subsystem high-power mode of operation (e.g. one that includes an equalizer with interference mitigation and receive diversity). Multiple demfront receivers may be in operation in the subsystem high-power mode of operation, with one being selected for demodulation of data (e.g. selection through CQI). Demfront receivers include an equalizer without receive diversity, an equalizer with interference mitigation with receive diversity, Rake receiver with receive diversity, and others, depending on UE functionality. At this point, the UE is monitoring HS-SCCH and HS-PDSCH for further data from the base station.

Once the inactivity threshold expires, then the UE can revert back to operation using the low-power demfront receiver, where it is only monitoring HS-SCCH and HS-PDSCH on the HS-SCCH reception pattern.

This can be combined with the UE-side timer as proposed in a second example of power-optimizing demfront selection by network prediction.

In a second example, in 3GPP UMTS Release 8 Enhanced UE DRX specifications, required monitoring of HS-SCCH and HS-PDSCH during the subframes in the HS-SCCH reception pattern is known based on enhanced UE DRX configuration, as defined in Section 8.5.49 of 3GPP TS 25.331 Release 8. This monitoring is required and independent of network activity. The requirement is to monitor HS-SCCH and HS-PDSCH (if required) in Rx_burst frames out of every DRX_Cycle frames. In addition, there is a T321 timer that indicates that UE is required to monitor HS-SCCH and HS-PDSCH continuously during this time, if set.

In the same manner as in example 1, a receiver subsystem low-power mode of operation can be used if no HS-SCCH and HS-PDSCH is detected, until the T321 timer is reset. Unlike Example 1, the T321 timer can be reset due to network activity outside of HS-SCCH and HS-PDSCH, which can be combined with the UE-side timer as proposed in the second example.

Power-Optimized Demfront Selection through Internal UE Network Activity Timer:

In general UE operation (not limited to DRX), the UE can perform this power-optimized receiver subsystem similar to that in the first example. Instead of relying on the Inactivity_Threshold_for_UE_DRX_Cycle parameter, the UE can use its own thresholds to estimate network activity usage.

In an aspect, the exception between this general UE operation and the DRX specific operation is that the low-power receiver subsystem will be used to decode all HS-SCCH outside the timer threshold instead of only on a subset of HS-SCCH subframes (the latter is not defined outside DRX). This implies that power optimizations based on receiver circuitry are not possible in the general UE operation; power optimizations can occur based on the selection of the demfront receiver subsystem mode of operation.

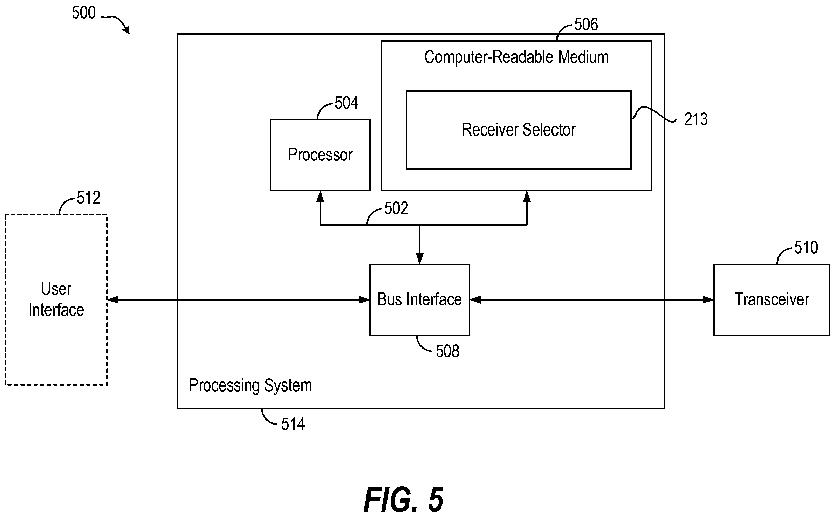

**FIG. 5** is a conceptual diagram illustrating an example of a hardware implementation for an apparatus **500** employing a processing system **514.** In this example, the processing system **514** may be implemented with a bus architecture, represented generally by the bus **502.** The bus **502** may include any number of interconnecting buses and bridges depending on the specific application of the processing system **514** and the overall design constraints. The bus **502** links together various circuits including one or more processors, represented generally by the processor **504,** and computer-readable media, represented generally by the computer-readable medium **506.** The bus **502** may also link various other circuits such as timing sources, peripherals, voltage regulators, and power management circuits, which are well known in the art, and therefore, will not be described any further. A bus interface **508** provides an interface between the bus **502** and a transceiver **510.** The transceiver **510** provides a means for communicating with various other apparatuses over a transmission medium. Depending upon the nature of the apparatus, a user interface **512** (e.g., keypad, display, speaker, microphone, joystick) may also be provided.

The processor **504** is responsible for managing the bus **502** and general processing, including the execution of software stored on the computer-readable medium **506.** The software, when executed by the processor **504,** causes the processing system 514 to perform the various functions described infra for any particular apparatus. The computer-readable medium **506** may also be used for storing data that is manipulated by the processor **504** when executing software.

The apparatus **500** can be the UE **202** (FIG. 2), wherein the computer-readable medium **506** comprises the receiver selector **213** (FIG. 2) to perform the methodology **100** (FIG. 1) according to aspects disclosed herein.

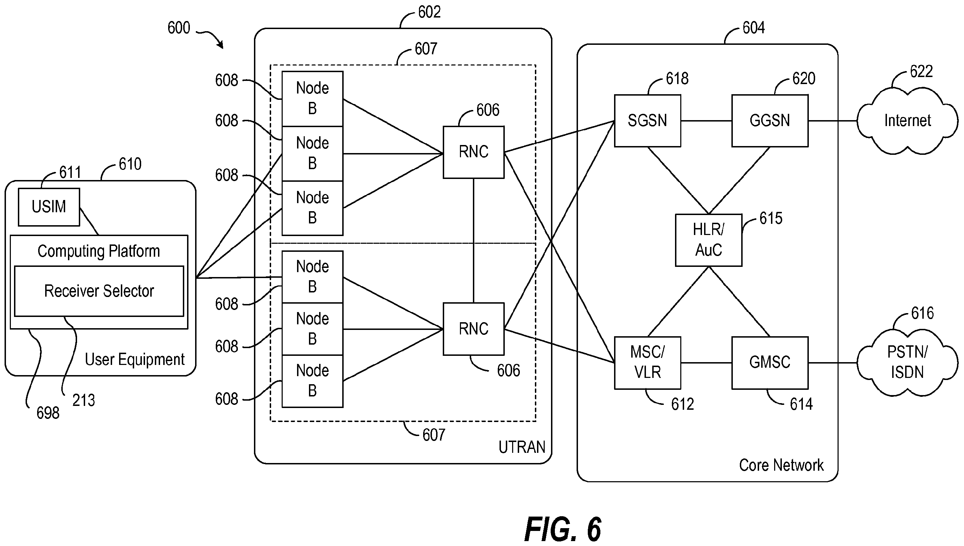

The various concepts presented throughout this disclosure may be implemented across a broad variety of telecommunication systems, network architectures, and communication standards. By way of example and without limitation, the aspects of the present disclosure illustrated in **FIG. 6** are presented with reference to a UMTS system **600** employing a W-CDMA air interface. A UMTS network includes three interacting domains: a Core Network (CN) **604,** a UMTS Terrestrial Radio Access Network (UTRAN) **602,** and User Equipment (UE) **610.** In this example, the UTRAN **602** provides various wireless services including telephony, video, data, messaging, broadcasts, and/or other services. The UTRAN **602** may include a plurality of Radio Network Subsystems (RNSs) such as an RNS **607,** each controlled by a respective Radio Network Controller (RNC) such as an RNC **606.** Here, the UTRAN **602** may include any number of RNCs **606** and RNSs **607** in addition to the RNCs **606** and RNSs **607** illustrated herein. The RNC **606** is an apparatus responsible for, among other things, assigning, reconfiguring and releasing radio resources within the RNS **607.** The RNC **606** may be interconnected to other RNCs (not shown) in the UTRAN **602** through various types of interfaces such as a direct physical connection, a virtual network, or the like, using any suitable transport network.

Communication between a UE **610** and a Node B **608** may be considered as including a physical (PHY) layer and a medium access control (MAC) layer. Further, communication between a UE **610** and an RNC **606** by way of a respective Node B **608** may be considered as including a radio resource control (RRC) layer. In the instant specification, the PHY layer may be considered layer 1; the MAC layer may be considered layer 2; and the RRC layer may be considered layer 3. Information herein below utilizes terminology introduced in Radio Resource Control (RRC) Protocol Specification, 3GPP TS 25.331 v9.1.0, incorporated herein by reference.

The geographic region covered by the SRNS **607** may be divided into a number of cells, with a radio transceiver apparatus serving each cell. A radio transceiver apparatus is commonly referred to as a Node B in UMTS applications, but may also be referred to by those skilled in the art as a base station (BS), a base transceiver station (BTS), a radio base station, a radio transceiver, a transceiver function, a basic service set (BSS), an extended service set (ESS), an access point (AP), or some other suitable terminology. For clarity, three Node Bs **608** are shown in each SRNS **607;** however, the SRNSs **607** may include any number of wireless Node Bs. The Node Bs **608** provide wireless access points to a core network (CN) **604** for any number of mobile apparatuses. Examples of a mobile apparatus include a cellular phone, a smart phone, a session initiation protocol (SIP) phone, a laptop, a notebook, a netbook, a smartbook, a personal digital assistant (PDA), a satellite radio, a global positioning system (GPS) device, a multimedia device, a video device, a digital audio player (e.g., MP3 player), a camera, a game console, or any other similar functioning device. The mobile apparatus is commonly referred to as user equipment (UE) in UMTS applications, but may also be referred to by those skilled in the art as a mobile station (MS), a subscriber station, a mobile unit, a subscriber unit, a wireless unit, a remote unit, a mobile device, a wireless device, a wireless communications device, a remote device, a mobile subscriber station, an access terminal (AT), a mobile terminal, a wireless terminal, a remote terminal, a handset, a terminal, a user agent, a mobile client, a client, or some other suitable terminology. In a UMTS system, the UE **610** may further include a universal subscriber identity module (USIM) **611,** which contains a user's subscription information to a network. For illustrative purposes, one UE **610** is shown in communication with a number of the Node Bs **608.** The downlink (DL), also called the forward link, refers to the communication link from a Node B **608** to a UE **610,** and the uplink (UL), also called the reverse link, refers to the communication link from a UE **610** to a Node B **608.**

The core network **604** interfaces with one or more access networks, such as the UTRAN **602.** As shown, the core network **604** is a GSM core network. However, as those skilled in the art will recognize, the various concepts presented throughout this disclosure may be implemented in a Radio Access Network (RAN), or other suitable access network, to provide UEs with access to types of core networks other than GSM networks.

The core network **604** includes a circuit-switched (CS) domain and a packet-switched (PS) domain. Some of the circuit-switched elements are a Mobile Services Switching Centre (MSC), a Visitor location register (VLR) and a Gateway MSC. Packet-switched elements include a Serving GPRS Support Node (SGSN) and a Gateway GPRS Support Node (GGSN). Some network elements, like EIR, HLR, VLR and AuC may be shared by both of the circuit-switched and packet-switched domains. In the illustrated example, the core network **604** supports circuit-switched services with a MSC **612** and a GMSC **614.** In some applications, the GMSC **614** may be referred to as a media gateway (MGW). One or more RNCs, such as the RNC **606,** may be connected to the MSC **612.** The MSC **612** is an apparatus that controls call setup, call routing, and UE mobility functions. The MSC **612** also includes a visitor location register (VLR) that contains subscriber-related information for the duration that a UE is in the coverage area of the MSC **612.** The GMSC **614** provides a gateway through the MSC **612** for the UE **610** to access a circuit-switched network **616.** The GMSC **614** includes a home location register (HLR) **615** containing subscriber data, such as the data reflecting the details of the services to which a particular user has subscribed. The HLR is also associated with an authentication center (AuC) that contains subscriber-specific authentication data. When a call is received for a particular UE, the GMSC **614** queries the HLR **615** to determine the UE's location and forwards the call to the particular MSC serving that location.

The core network **604** also supports packet-data services with a serving GPRS support node (SGSN) **618** and a gateway GPRS support node (GGSN) **620.** GPRS, which stands for General Packet Radio Service, is designed to provide packet-data services at speeds higher than those available with standard circuit-switched data services. The GGSN **620** provides a connection for the UTRAN **602** to a packet-based network **622.** The packet-based network **622** may be the Internet, a private data network, or some other suitable packet-based network. The primary function of the GGSN **620** is to provide the UEs **610** with packet-based network connectivity. Data packets may be transferred between the GGSN **620** and the UEs **610** through the SGSN **618,** which performs primarily the same functions in the packet-based domain as the MSC **612** performs in the circuit-switched domain.

The UMTS air interface is a spread spectrum Direct-Sequence Code Division Multiple Access (DS-CDMA) system. The spread spectrum DS-CDMA spreads user data through multiplication by a sequence of pseudorandom bits called chips. The W-CDMA air interface for UMTS is based on such direct sequence spread spectrum technology and additionally calls for a frequency division duplexing (FDD). FDD uses a different carrier frequency for the uplink (UL) and downlink (DL) between a Node B **608** and a UE **610.** Another air interface for UMTS that utilizes DS-CDMA, and uses time division duplexing, is the TD-SCDMA air interface. Those skilled in the art will recognize that although various examples described herein may refer to a WCDMA air interface, the underlying principles are equally applicable to a TD-SCDMA air interface.

The UE **610** can be the UE **202** (FIG. 2), wherein the computing platform **698** comprises the receiver selector **213** (FIG. 2) to perform the methodology **100** (FIG. 1) according to aspects disclosed herein.

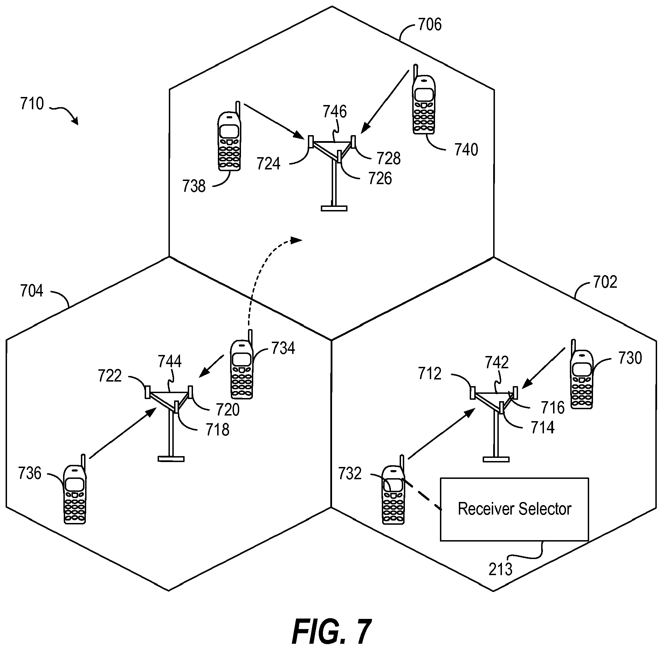

Referring to **FIG. 7****,** an access network **700** in a UTRAN architecture is illustrated. The multiple access wireless communication system includes multiple cellular regions (cells), including cells **702, 704,** and **706,** each of which may include one or more sectors. The multiple sectors can be formed by groups of antennas with each antenna responsible for communication with UEs in a portion of the cell. For example, in cell **702,** antenna groups **712, 714,** and **716** may each correspond to a different sector. In cell **704,** antenna groups **718, 720,** and **722** each correspond to a different sector. In cell **706,** antenna groups **724, 726,** and **728** each correspond to a different sector. The cells **702, 704** and **706** may include several wireless communication devices, e.g., User Equipment or UEs, which may be in communication with one or more sectors of each cell **702, 704** or **706.** For example, UEs **730** and **732** may be in communication with Node B **742,** UEs **734** and **736** may be in communication with Node B **744,** and UEs **738** and **740** can be in communication with Node B **746.** Here, each Node B **742, 744, 746** is configured to provide an access point to a core network for all the UEs **730, 732, 734, 736, 738, 740** in the respective cells **702, 704,** and **706.**

As the UE **734** moves from the illustrated location in cell **704** into cell **706,** a serving cell change (SCC) or handover may occur in which communication with the UE **734** transitions from the cell **704,** which may be referred to as the source cell, to cell **706,** which may be referred to as the target cell. Management of the handover procedure may take place at the UE **734,** at the Node Bs corresponding to the respective cells, at a radio network controller, or at another suitable node in the wireless network. For example, during a call with the source cell **704,** or at any other time, the UE **734** may monitor various parameters of the source cell **704** as well as various parameters of neighboring cells such as cells **706** and **702.** Further, depending on the quality of these parameters, the UE **734** may maintain communication with one or more of the neighboring cells. During this time, the UE **734** may maintain an Active Set, that is, a list of cells that the UE **734** is simultaneously connected to (e.g., the UTRA cells that are currently assigning a downlink dedicated physical channel DPCH or fractional downlink dedicated physical channel F-DPCH to the UE **734** may constitute the Active Set).

The modulation and multiple access scheme employed by the access network 700 may vary depending on the particular telecommunications standard being deployed. By way of example, the standard may include Evolution-Data Optimized (EV-DO) or Ultra Mobile Broadband (UMB). EV-DO and UMB are air interface standards promulgated by the Third Generation Partnership Project **2** (3GPP2) as part of the CDMA2000 family of standards and employs CDMA to provide broadband Internet access to mobile stations. The standard may alternately be Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), Ultra Mobile Broadband (UMB), IEEE 802.7 (Wi-Fi), IEEE 802.16 (WiMAX), IEEE 802.20, and Flash-OFDM employing OFDMA. UTRA, E-UTRA, UMTS, LTE, LTE Advanced, and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

At least one of the UEs **730, 732, 734, 736, 738, 740** comprises a power-optimized demfront selection component **799** for selection of multiple receivers according to aspects disclosed herein.

The UE **732** can be the UE **202** (FIG. 2), including the receiver selector **213** (FIG. 2) to perform the methodology **100** (FIG. 1) according to aspects disclosed herein.

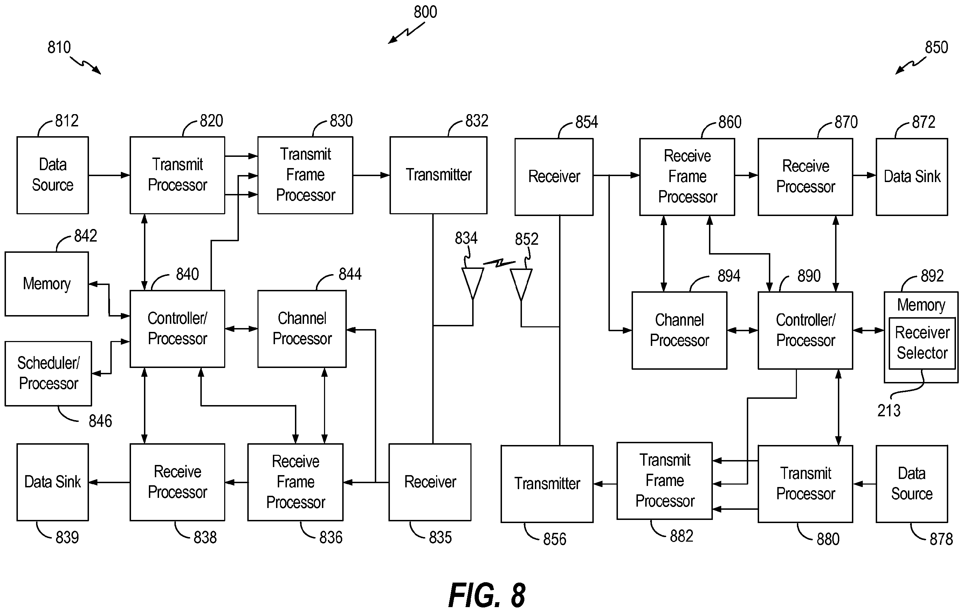

**FIG. 8** is a block diagram of a Node B **810** in communication with a UE **850.** In the downlink communication, a transmit processor **820** may receive data from a data source **812** and control signals from a controller/processor **840.** The transmit processor **820** provides various signal processing functions for the data and control signals, as well as reference signals (e.g., pilot signals). For example, the transmit processor **820** may provide cyclic redundancy check (CRC) codes for error detection, coding and interleaving to facilitate forward error correction (FEC), mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM), and the like), spreading with orthogonal variable spreading factors (OVSF), and multiplying with scrambling codes to produce a series of symbols. Channel estimates from a channel processor **844** may be used by a controller/processor **840** to determine the coding, modulation, spreading, and/or scrambling schemes for the transmit processor **820.** These channel estimates may be derived from a reference signal transmitted by the UE **850** or from feedback from the UE **850.** The symbols generated by the transmit processor **820** are provided to a transmit frame processor **830** to create a frame structure. The transmit frame processor **830** creates this frame structure by multiplexing the symbols with information from the controller/processor **840,** resulting in a series of frames. The frames are then provided to a transmitter **832,** which provides various signal conditioning functions including amplifying, filtering, and modulating the frames onto a carrier for downlink transmission over the wireless medium through antenna **834.** The antenna **834** may include one or more antennas, for example, including beam steering bidirectional adaptive antenna arrays or other similar beam technologies.

At the UE **850,** a receiver **854** receives the downlink transmission through an antenna **852** and processes the transmission to recover the information modulated onto the carrier. The information recovered by the receiver **854** is provided to a receive frame processor **860,** which parses each frame, and provides information from the frames to a channel processor **894** and the data, control, and reference signals to a receive processor **870.** The receive processor **870** then performs the inverse of the processing performed by the transmit processor **820** in the Node B **810.** More specifically, the receive processor **870** descrambles and despreads the symbols, and then determines the most likely signal constellation points transmitted by the Node B **810** based on the modulation scheme. These soft decisions may be based on channel estimates computed by the channel processor **894.** The soft decisions are then decoded and deinterleaved to recover the data, control, and reference signals. The CRC codes are then checked to determine whether the frames were successfully decoded. The data carried by the successfully decoded frames will then be provided to a data sink **872,** which represents applications running in the UE **850** and/or various user interfaces (e.g., display). Control signals carried by successfully decoded frames will be provided to a controller/processor **890.** When frames are unsuccessfully decoded by the receiver processor **870,** the controller/processor **890** may also use an acknowledgement (ACK) and/or negative acknowledgement (NACK) protocol to support retransmission requests for those frames.

In the uplink, data from a data source **878** and control signals from the controller/processor **890** are provided to a transmit processor **880.** The data source **878** may represent applications running in the UE **850** and various user interfaces (e.g., keyboard). Similar to the functionality described in connection with the downlink transmission by the Node B **810,** the transmit processor **880** provides various signal processing functions including CRC codes, coding and interleaving to facilitate FEC, mapping to signal constellations, spreading with OVSFs, and scrambling to produce a series of symbols. Channel estimates, derived by the channel processor **894** from a reference signal transmitted by the Node B **810** or from feedback contained in the midamble transmitted by the Node B **810,** may be used to select the appropriate coding, modulation, spreading, and/or scrambling schemes. The symbols produced by the transmit processor **880** will be provided to a transmit frame processor **882** to create a frame structure. The transmit frame processor **882** creates this frame structure by multiplexing the symbols with information from the controller/processor **890,** resulting in a series of frames. The frames are then provided to a transmitter **856,** which provides various signal conditioning functions including amplification, filtering, and modulating the frames onto a carrier for uplink transmission over the wireless medium through the antenna **852.**

The uplink transmission is processed at the Node B **810** in a manner similar to that described in connection with the receiver function at the UE **850.** A receiver **835** receives the uplink transmission through the antenna **834** and processes the transmission to recover the information modulated onto the carrier. The information recovered by the receiver **835** is provided to a receive frame processor **836, which** parses each frame, and provides information from the frames to the channel processor **844** and the data, control, and reference signals to a receive processor **838.** The receive processor **838** performs the inverse of the processing performed by the transmit processor **880** in the UE **850.** The data and control signals carried by the successfully decoded frames may then be provided to a data sink **839** and the controller/processor, respectively. If some of the frames were unsuccessfully decoded by the receive processor, the controller/processor **840** may also use an acknowledgement (ACK) and/or negative acknowledgement (NACK) protocol to support retransmission requests for those frames.

The controller/processors **840** and **890** may be used to direct the operation at the Node B **810** and the UE **850,** respectively. For example, the controller/processors **840** and **890** may provide various functions including timing, peripheral interfaces, voltage regulation, power management, and other control functions. The computer readable media of memories **842** and **892** may store data and software for the Node B **810** and the UE **850,** respectively. A scheduler/processor **846** at the Node B **810** may be used to allocate resources to the UEs and schedule downlink and/or uplink transmissions for the UEs.

The UE **850** can be the UE **202** (FIG. 2) wherein the memory **892** comprises the receiver selector **213** (FIG. 2) to perform the methodology **100** (FIG. 1) according to aspects disclosed herein.

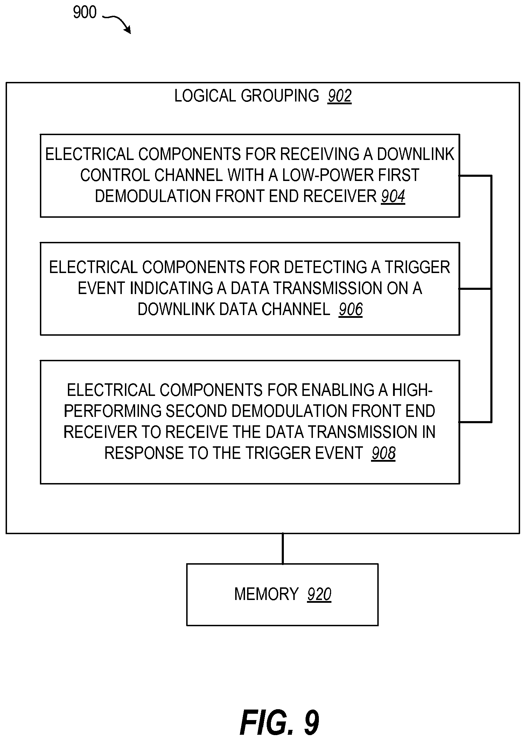

With reference to **FIG. 9****,** illustrated is a system **900** for power-optimizing demodulator front end receiver subsystem selection in a cellular communication system. For example, system **900** can reside at least partially within user equipment (UE). It is to be appreciated that system **900** is represented as including functional blocks, which can be functional blocks that represent functions implemented by a computing platform, processor, software, or combination thereof (e.g., firmware). System **900** includes a logical grouping **902** of electrical components that can act in conjunction. For instance, logical grouping **902** can include an electrical component **904** for receiving a downlink control channel with a first demodulation front end receiver subsystem. Moreover, logical grouping **902** can include an electrical component **906** for detecting a trigger event indicating a data transmission on a downlink data channel. Further, logical grouping **902** can include an electrical component **908** for enabling a second demodulation front end receiver subsystem to receive the data transmission in response to the trigger event, wherein the first demodulation front end receiver subsystem consumes less power than the second demodulation front end receiver subsystem. Additionally, system **900** can include a memory **920** that retains instructions for executing functions associated with electrical components **904-908.** While shown as being external to memory **920,** it is to be understood that one or more of electrical components **904-908** can exist within memory **920.**

With the benefit of the present disclosure, it should be appreciated that adaptive CRE has potential to respond faster to deep fades although better estimation of speed/channel, and may yield even better performance. It is further contemplated that detection of TPC delay in SHO can be addressed. Adaptive CRE optimization of R, H (parameters) can be based upon desired missed detection or false alarm (e.g., across speed/channel). Operation in dynamic channel (e.g., change of speed/channel during operation) can be addressed.

Several aspects of a telecommunication system have been presented with reference to a W-CDMA system. As those skilled in the art will readily appreciate, various aspects described throughout this disclosure may be extended to other telecommunication systems, network architectures and communication standards.

By way of example, various aspects may be extended to other UMTS systems such as TD-SCDMA, High Speed Downlink Packet Access (HSDPA), High Speed Uplink Packet Access (HSUPA), High Speed Packet Access Plus (HSPA+) and TD-CDMA. Various aspects may also be extended to systems employing Long Term Evolution (LTE) (in FDD, TDD, or both modes), LTE-Advanced (LTE-A) (in FDD, TDD, or both modes), CDMA2000, Evolution-Data Optimized (EV-DO), Ultra Mobile Broadband (UMB), IEEE 802.11 (Wi-Fi), IEEE 802.16 (WiMAX), IEEE 802.20, Ultra-Wideband (UWB), Bluetooth, and/or other suitable systems. The actual telecommunication standard, network architecture, and/or communication standard employed will depend on the specific application and the overall design constraints imposed on the system.

In accordance with various aspects of the disclosure, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a computer-readable medium. The computer-readable medium may be a non-transitory computer-readable medium. A non-transitory computer-readable medium includes, by way of example, a magnetic storage device (e.g., hard disk, floppy disk, magnetic strip), an optical disk (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, and any other suitable medium for storing software and/or instructions that may be accessed and read by a computer. The computer-readable medium may also include, by way of example, a carrier wave, a transmission line, and any other suitable medium for transmitting software and/or instructions that may be accessed and read by a computer. The computer-readable medium may be resident in the processing system, external to the processing system, or distributed across multiple entities including the processing system. The computer-readable medium may be embodied in a computer-program product. By way of example, a computer-program product may include a computer-readable medium in packaging materials. Those skilled in the art will recognize how best to implement the described functionality presented throughout this disclosure depending on the particular application and the overall design constraints imposed on the overall system.

It is to be understood that the specific order or hierarchy of steps in the methods disclosed is an illustration of exemplary processes. Based upon design preferences, it is understood that the specific order or hierarchy of steps in the methods may be rearranged. The accompanying method claims present elements of the various steps in a sample order, and are not meant to be limited to the specific order or hierarchy presented unless specifically recited therein.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more. A phrase referring to "at least one of" a list of items refers to any combination of those items, including single members. As an example, "at least one of: a, b, or c" is intended to cover: a; b; c; a and b; a and c; b and c; and a, b and c. All structural and functional equivalents to the elements of the various aspects described throughout this disclosure that are known or later come to be known to those of ordinary skill in the art are are intended to be encompassed by the claims. Moreover, nothing disclosed herein is intended to be dedicated to the public regardless of whether such disclosure is explicitly recited in the claims. No claim element is to be construed under the provisions of 35 U.S.C. §112, sixth paragraph, unless the element is expressly recited using the phrase "means for" or, in the case of a method claim, the element is recited using the phrase "step for."

## Claims

1. An apparatus comprising:
a first receiver (204) configured to receive, on a control channel, a first schedule indicating when a device is to receive data on a downlink;
a second receiver (206) that consumes more power than the first receiver (204), the second receiver configured to receive the data on the downlink according to the first schedule; and
a receiver selector (213) configured to:
enable the first receiver (204) to receive the control channel on the downlink from a node;
enable the second receiver (206) to receive the data on the downlink according to the first schedule and to receive the control channel;
disable the first receiver while the second receiver receives the data on the downlink, and
re-enable the first receiver (204) for receiving the control channel on the downlink subsequent to the second receiver receiving the data based on expiration of a timer having an associated timer duration,
the timer duration is based on a period of network activity or a network parameter associated with discontinuous reception.

2. The apparatus of claim 1, wherein the receiver selector (213) is further adapted for receiving the control channel by the first receiver (206) during a duration of the timer, and extending the duration of the timer in response to determining that the control channel schedules the device to receive additional data.

3. The apparatus of any preceding claim, wherein the receiver selector (213) is further adapted for performing discontinuous reception in a connected mode by enabling the first receiver (204) of the device for receiving the control channel on the downlink from the node.

4. The apparatus of any preceding claim, wherein the first receiver (204) comprises a rake receiver and the second receiver comprises an equalizer receiver.

5. The apparatus of any preceding claim, wherein the first receiver (204) does not perform interference mitigation and the second receiver performs interference mitigation.

6. The apparatus of any preceding claim, wherein the first receiver (204) does not perform receive diversity and the second receiver performs receive diversity.

7. The apparatus of any preceding claim, wherein the receiver selector (213) is further adapted for determining that the control channel schedules the device to receive the data on the downlink by detecting a valid High Speed Shared Control Channel (HS-SCCH).

8. The apparatus of any preceding claim, wherein the receiver selector (213) is further adapted for determining that the control channel schedules the device to receive the data on the downlink by detecting a valid High-Speed Physical Downlink Shared Channel (HS-PDSCH).

9. The apparatus of any preceding claim, wherein the receiver selector (213) is further adapted for enabling the first receiver (204) for receiving the control channel on the downlink subsequent to receiving the data by monitoring a timer for Continuous Packet Connectivity- Discontinuous Reception (CPC-DRX) parameter Inactivity_Threshold_for_UE_DRX_Cycle.

10. The apparatus of claim 9, wherein the receiver selector (213) is further adapted for enabling the first receiver (204) for receiving the control channel on the downlink subsequent to receiving the data by monitoring an internal user equipment timer in addition to the timer for CPC-DRX parameter Inactivity_Threshold_for_UE_DRX_Cycle.

11. The apparatus of any preceding claim, wherein the receiver selector (213) is further adapted for enabling the first receiver (204) for receiving the control channel on the downlink subsequent to receiving the data by monitoring a timer for Enhanced UE DRX T321 parameter.

12. The apparatus of claim 11, wherein the receiver selector (213) is further adapted for enabling the first receiver for receiving the control channel on the downlink subsequent to receiving the data by monitoring an internal user equipment timer in addition to the timer for Enhanced UE DRX T321 parameter.

## Patentansprüche

1. Eine Vorrichtung, die aufweist:
einen ersten Empfänger (204), der konfiguriert ist zum Empfangen, auf einem Steuerkanal, eines ersten Plans, der angibt, wann ein Gerät Daten auf einer Abwärtsstrecke empfangen soll,
einen zweiten Empfänger (206), der mehr Strom verbraucht als der erste Empfänger (204), wobei der zweite Empfänger konfiguriert ist zum Empfangen der Daten auf der Abwärtsstrecke gemäß dem ersten Plan, und
einen Empfänger-Selektor (213), der konfiguriert ist zum:
Aktivieren des ersten Empfängers (204) für das Empfangen des Steuerkanals auf der Abwärtsstrecke von einem Knoten,
Aktivieren des zweiten Empfängers (206) für das Empfangen der Daten auf der Abwärtsstrecke gemäß dem ersten Plan und für das Empfangen des Steuerkanals,
Deaktivieren des ersten Empfängers, während der zweite Empfänger die Daten auf der Abwärtsstrecke empfängt, und
erneutes Aktivieren des ersten Empfängers (204) für das Empfangen des Steuerkanals auf der Abwärtsstrecke auf das Empfangen der Daten durch den zweiten Empfänger folgend basierend auf dem Ablaufen eines Timers mit einer assoziierten Timerdauer,
wobei die Timerdauer auf einer Periode einer Netzwerkaktivität oder einem Netzwerkparameter, der mit einem diskontinuierlichen Empfang assoziiert ist, basiert.

2. Vorrichtung nach Anspruch 1, wobei der Empfänger-Selektor (213) weiterhin ausgebildet ist zum Empfangen des Steuerkanals durch den ersten Empfänger (206) während einer Dauer des Timers und zum Verlängern der Dauer des Timers in Antwort auf das Bestimmen, dass der Steuerkanal das Gerät für das Empfangen von zusätzlichen Daten plant.

3. Vorrichtung nach einem der vorstehenden Ansprüche, wobei der Empfänger-Selektor (213) weiterhin ausgebildet ist zum Durchführen eines diskontinuierlichen Empfangs in einem verbundenen Modus durch das Aktivieren des ersten Empfängers (204) des Geräts für das Empfangen des Steuerkanals auf der Abwärtsstrecke von dem Knoten.

4. Vorrichtung nach einem der vorstehenden Ansprüche, wobei der erste Empfänger (204) ein Rake-Empfänger ist und der zweite Empfänger ein Equalizer-Empfänger ist.

5. Vorrichtung nach einem der vorstehenden Ansprüche, wobei der erste Empfänger (204) keine Interferenzabschwächung durchführt und der zweite Empfänger eine Interferenzabschwächung durchführt.

6. Vorrichtung nach einem der vorstehenden Ansprüche, wobei der erste Empfänger (204) keine Empfangsdiversität durchführt und der zweite Empfänger eine Empfangsdiversität durchführt.

7. Vorrichtung nach einem der vorstehenden Ansprüche, wobei der Empfänger-Selektor (213) weiterhin ausgebildet ist zum Bestimmen, dass der Steuerkanal das Gerät für das Empfangen der Daten auf der Abwärtsstrecke plant, durch das Erfassen eines gültigen High Speed Shared Control Channel bzw. HS-SCCH.

8. Vorrichtung nach einem der vorstehenden Ansprüche, wobei der Empfänger-Selektor (213) weiterhin ausgebildet ist zum Bestimmen, dass der Steuerkanal das Gerät für das Empfangen der Daten auf der Abwärtsstrecke plant, durch das Erfassen eines gültigen High-Speed Physical Downlink Shared Channel bzw. HS-PDSCH.

9. Vorrichtung nach einem der vorstehenden Ansprüche, wobei der Empfänger-Selektor (213) weiterhin ausgebildet ist zum Aktivieren des ersten Empfängers (204) für das Empfangen des Steuerkanals auf der Abwärtsstrecke auf das Empfangen der Daten folgend durch das Überwachen eines Timers für einen Continuous Packet Connectivity-Discontinuous Reception (CPC-DRX)-Parameter-Inactivity_Threshold_for_UE_DRX_Cycle.

10. Vorrichtung nach Anspruch 9, wobei der Empfänger-Selektor (213) weiterhin ausgebildet ist zum Aktivieren des ersten Empfängers (204) für das Empfangen des Steuerkanals auf der Abwärtsstrecke auf das Empfangen der Daten folgend durch das Überwachen eines internen Benutzergerät-Timers zusätzlich zu dem Timer für den CPC-DRX-Parameter-Inactivity_Threshold_for_UE_DRX_Cycle.

11. Vorrichtung nach einem der vorstehenden Ansprüche, wobei der Empfänger-Selektor (213) weiterhin ausgebildet ist zum Aktivieren des ersten Empfängers (204) für das Empfangen des Steuerkanals auf der Abwärtsstrecke auf das Empfangen der Daten folgend durch das Überwachen eines Timers für einen Enhanced UE DRX T321-Parameter.

12. Vorrichtung nach Anspruch 11, wobei der Empfänger-Selektor (213) weiterhin ausgebildet ist zum Aktivieren des ersten Empfängers für das Empfangen des Steuerkanals auf der Abwärtsstrecke auf das Empfangen der Daten folgend durch das Überwachen eines internen Benutzergerät-Timers zusätzlich zu dem Timer für den Enhanced UE DRX T321-Parameter.

## Revendications

1. Un appareil comprenant :
un premier récepteur (204) configuré de façon à recevoir, sur un canal de commande, un premier échéancier indiquant à quel moment un dispositif doit recevoir des données sur une liaison descendante,
un deuxième récepteur (206) qui consomme plus de puissance que le premier récepteur (204), le deuxième récepteur étant configuré de façon à recevoir les données sur la liaison descendante en fonction du premier échéancier, et
un sélecteur récepteur (213) configuré de façon à :
permettre au premier récepteur (204) de recevoir le canal de commande sur la liaison descendante à partir d'un noeud,
permettre au deuxième récepteur (206) de recevoir les données sur la liaison descendante en fonction du premier échéancier et de recevoir le canal de commande,
désactiver le premier récepteur pendant que le deuxième récepteur reçoit les données sur la liaison descendante, et
re-permettre au premier récepteur (204) de recevoir le canal de commande sur la liaison descendante suite à la réception par le deuxième récepteur des données en fonction de l'expiration d'une horloge possédant une durée d'horloge associée,
la durée d'horloge est basée sur une période d'activité de réseau ou un paramètre de réseau associé à une réception discontinue.

2. L'appareil selon la Revendication 1, où le sélecteur récepteur (213) est adapté en outre de façon à recevoir le canal de commande par le premier récepteur (206) au cours d'une durée de l'horloge, et à prolonger la durée de l'horloge en réponse à la détermination que le canal de commande planifie le dispositif de façon à recevoir des données additionnelles.

3. L'appareil selon l'une quelconque des Revendications précédentes, où le sélecteur récepteur (213) est adapté en outre de façon à exécuter une réception discontinue dans un mode connecté en permettant au premier récepteur (204) du dispositif pour recevoir le canal de commande sur la liaison descendante à partir du noeud.

4. L'appareil selon l'une quelconque des Revendications précédentes, où le premier récepteur (204) comprend un récepteur en râteau et le deuxième récepteur comprend un récepteur égaliseur.

5. L'appareil selon l'une quelconque des Revendications précédentes, où le premier récepteur (204) n'exécute pas une atténuation de brouillage et le deuxième récepteur exécute une atténuation de brouillage.

6. L'appareil selon l'une quelconque des Revendications précédentes, où le premier récepteur (204) n'exécute pas une diversité en réception et le deuxième récepteur exécute une diversité en réception.

7. L'appareil selon l'une quelconque des Revendications précédentes, où le sélecteur récepteur (213) est adapté en outre de façon à déterminer que le canal de commande planifie le dispositif de façon à recevoir les données sur la liaison descendante par la détection d'un canal de commande partagé à haut débit (HS-SCCH) valide.

8. L'appareil selon l'une quelconque des Revendications précédentes, où le sélecteur récepteur (213) est adapté en outre de façon à déterminer que le canal de commande planifie le dispositif de façon à recevoir les données sur la liaison descendante par la détection d'un canal partagé en liaison descendante physique à haut débit (HS-PDSCH) valide.

9. L'appareil selon l'une quelconque des Revendications précédentes, où le sélecteur récepteur (213) est adapté en outre de façon à activer le premier récepteur (204) pour la réception du canal de commande sur la liaison descendante suite à la réception des données par la surveillance d'une horloge à la recherche d'un paramètre de Connectivité en mode paquets continue-Réception discontinue (CPC-DRX) Inactivity_Threshold_for_UE_DRX_Cycle.

10. L'appareil selon la Revendication 9, où le sélecteur récepteur (213) est adapté en outre de façon à activer le premier récepteur (204) pour la réception du canal de commande sur la liaison descendante suite à la réception des données par la surveillance d'une horloge d'équipement d'utilisateur interne en plus de l'horloge pour le paramètre CPC-DRX Inactivity_Threshold_for_UE_DRX_Cycle.

11. L'appareil selon l'une quelconque des Revendications précédentes, où le sélecteur récepteur (213) est adapté en outre de façon à activer le premier récepteur (204) pour la réception du canal de commande sur la liaison descendante suite à la réception des données par la surveillance d'une horloge pour le paramètre Enhanced_UE_DRX_T321.

12. L'appareil selon la Revendication 11, où le sélecteur récepteur (213) est adapté en outre de façon à activer le premier récepteur pour la réception du canal de commande sur la liaison descendante suite à la réception des données par la surveillance d'une horloge d'équipement d'utilisateur interne en plus de l'horloge pour le paramètre Enhanced_UE_DRX_T321.
